# DEMANDE DE BREVET EUROPEEN

(11) **EP 4 843 813 A1**
(43) Date de publication de la demande: **25.11.2026**
(21) Numéro de dépôt: 26172810.9
(22) Date de dépôt: 16.04.2026
(51) Int. Cl.: B60K 35/21

(54) **PROCÉDÉ ET DISPOSITIF DE CONTRÔLE D'UNE INTERFACE HOMME-MACHINE EMBARQUÉE DANS UN VÉHICULE INFORMANT D'UNE REPRISE DE CONTRÔLE PAR UN SYSTÈME DE RÉGULATION DE VITESSE ADAPTATIF ET PRÉDICTIF**

(30) Priorité: 19.05.2025 FR 2505301
(71) Demandeur: Stellantis Auto SAS, 78300 Poissy (FR)
(72) Inventeur: DUSI, JACQUES, 77220 GRETZ ARMAINVILLIERS (FR)
(74) Mandataire: ESIP

(57) **Abrégé**

Dispositif et procédé de contrôle d'une interface homme-machine, dite IHM, embarquée dans un véhicule circulant sur une portion de route (101) comprenant un nœud (101n), le véhicule embarquant un système de régulation de vitesse adaptatif et prédictif, dit système P-ACC. En effet, le procédé comprend la réception de données représentatives d'une distance (d) entre le véhicule et une position du nœud, d'une vitesse maximale (vₘₐₓ) de franchissement du nœud, de données représentatives d'une décélération maximale autorisée, de données représentatives d'une vitesse courante (v_{cour}) du véhicule et de données représentatives d'une consigne d'accélération prioritaire vis-à-vis d'une consigne d'accélération déterminée par le système P-ACC. Des objets graphiques sont affichés sur un écran de l'IHM en fonction d'un résultat d'une comparaison entre une accélération maximale admissible et une accélération théorique déterminée en fonction des données reçues pour alerter le conducteur du véhicule d'un comportement du système P-ACC lorsqu'il lâchera l'accélérateur.

## Description

### Domaine technique

La présente invention concerne les procédés et dispositifs de contrôle d'une vitesse d'un véhicule à l'approche et dans un virage ou à l'approche et dans une intersection, notamment un véhicule automobile. La présente invention concerne également un procédé et un dispositif de contrôle d'un système d'aide à la conduite embarqué dans un véhicule tel qu'un régulateur de vitesse adaptatif.

### Arrière-plan technologique

La sécurité routière fait partie des enjeux importants de nos sociétés. Avec l'augmentation du nombre de véhicules circulant sur les réseaux routiers du monde entier, et ce quelle que soient les conditions de circulation, les risques d'accidents et d'incidents provoqués par les conditions de circulation n'ont jamais été aussi importants.

Pour améliorer la sécurité routière, certains véhicules contemporains sont équipés de fonctions ou systèmes d'aide à la conduite, dits ADAS (de l'anglais « Advanced Driver-Assistance System » ou en français « Système d'aide à la conduite avancé »). Les systèmes ADAS mettent par exemple en œuvre des procédés basés sur la connaissance de l'environnement routier dans lequel le véhicule circule. La connaissance de cet environnement est par exemple obtenue à partir de données de cartographies de l'environnement reçues par exemple d'un dispositif distant de type serveur via un réseau de communication sans fil, au fur et à mesure du déplacement du véhicule.

Ces données de cartographies comprennent notamment des données sur des virages et/ou des intersections situées sur le parcours d'un véhicule, ces données étant utilisées par un ou plusieurs systèmes ADAS, par exemple pour contrôler la vitesse du véhicule en approche ou dans un virage ou une intersection.

Un conducteur du véhicule peut être amené à vouloir outrepasser la vitesse consigne d'un régulateur de vitesse adaptatif en dérogeant au comportement de ce système de manière à aborder plus rapidement un virage ou une intersection. De plus, une mauvaise interprétation des données du virage ou de l'intersection par le véhicule et/ou une mauvaise anticipation du trajet du véhicule suite à la dérogation entraine des risques de dysfonctionnement du ou des systèmes ADAS utilisant ces données et/ou un risque sécuritaire pour le véhicule et ses passagers.

### Résumé de la présente invention

Un objet de la présente invention est de résoudre au moins l'un des problèmes de l'arrière-plan technologique décrit précédemment.

Un autre objet de la présente invention est de fiabiliser un comportement d'un système de régulation de vitesse adaptatif, notamment lorsque le conducteur outrepasse la vitesse consigne.

Encore un autre objet de la présente invention est de prévenir le conducteur d'un véhicule lorsque le système de régulation de vitesse adaptatif n'est pas en mesure de contrôler la vitesse et/ou la trajectoire du véhicule, notamment à l'approche d'un virage ou d'une intersection.

Selon un premier aspect, la présente invention concerne un procédé de contrôle d'une interface homme-machine, dite IHM, embarquée dans un véhicule et comprenant un écran, ledit véhicule circulant sur une portion de route d'un environnement routier comprenant un nœud situé en aval du véhicule selon un sens de déplacement du véhicule, le véhicule embarquant un système de régulation de vitesse adaptatif et prédictif, dit système P-ACC, ledit procédé étant mis en œuvre par au moins un processeur et comprenant les étapes suivantes :
- réception de :
   - données représentatives d'une valeur de distance entre une position courante du véhicule et une position du nœud, et d'une vitesse maximale de franchissement du nœud sous le contrôle du système P-ACC,
   - données représentatives d'une consigne d'accélération depuis un capteur associé à une pédale d'accélérateur du véhicule, la consigne d'accélération étant prioritaire vis-à-vis d'une consigne d'accélération déterminée par le système P-ACC,
   - données représentatives d'une décélération maximale autorisée prédéterminée pour le système P-ACC,
   - données représentatives d'une vitesse courante du véhicule,
- détermination d'une accélération théorique en fonction de la valeur de distance, de la vitesse maximale et de la vitesse courante ;
- première comparaison de la valeur absolue de l'accélération théorique à la valeur absolue de la décélération maximale autorisée ;
- si la valeur absolue de l'accélération théorique est inférieure ou égale à la valeur absolue de la décélération maximale autorisée, contrôle d'un affichage d'un premier objet graphique sur l'écran, le premier objet graphique étant représentatif d'une capacité du système P-ACC à contrôler l'accélération du véhicule pour franchir ledit nœud.

La reprise du contrôle de la vitesse du véhicule par le système P-ACC est donc sujette à la possibilité ou non de franchir le nœud à une vitesse acceptable selon les paramètres du système P-ACC, c'est-à-dire que le système P-ACC ne reprend le contrôle de la vitesse du véhicule que s'il est en mesure de franchir le nœud à une vitesse inférieure ou égale à une vitesse maximale prédéfinie, par exemple en usine. Ainsi, le conducteur est prévenu, via la présence ou non d'un objet graphique affiché sur l'écran, de la capacité du système P-ACC à reprendre la main quant au contrôle de l'accélération, et donc de la vitesse du véhicule.

Selon une variante, le procédé comprend en outre une deuxième comparaison de la valeur absolue de l'accélération théorique à une valeur absolue d'une décélération limite prédéterminée, le premier objet graphique étant affiché :
- de manière continue sur l'écran lorsque la valeur absolue de l'accélération théorique est inférieure à la valeur absolue de la décélération limite, et
- de manière intermittente sur l'écran lorsque la valeur absolue de l'accélération théorique est comprise entre la valeur absolue de la décélération limite et la valeur absolue de la décélération maximale admissible.

Selon une autre variante, le procédé comprend en outre un contrôle d'affichage d'un deuxième objet graphique sur l'écran si la valeur absolue de l'accélération théorique est supérieure à la valeur absolue de la décélération maximale autorisée, le deuxième objet graphique étant représentatif d'une incapacité du système P-ACC à contrôler l'accélération du véhicule pour franchir le nœud.

Selon encore une variante du procédé, le nœud correspond à :
- une intersection, ou
- un virage, ou
- un changement de direction.

Selon une variante supplémentaire du procédé, l'indice de vitesse est représentatif d'au moins une caractéristique du nœud appartenant à un ensemble de caractéristiques comprenant :
- un nombre de voies,
- une géométrie ou un rayon de courbure de la portion de route 101,
- une limitation de vitesse,
- un régime de priorité.

Selon une autre variante du procédé, la distance est déterminée par comparaison d'une position associée au nœud obtenue d'une cartographie et d'une position courante du véhicule obtenue par un système de géolocalisation.

Selon une variante supplémentaire du procédé, la distance est déterminée par au moins un capteur embarqué dans le véhicule, ledit capteur appartenant à un ensemble de capteurs comprenant :
- une caméra,
- un radar, et
- un LiDAR.

L'invention se rapporte également, selon un deuxième aspect, à un dispositif de contrôle d'une interface homme-machine embarquée dans un véhicule, le dispositif comprenant une mémoire associée à au moins un processeur configuré pour la mise en oeuvre des étapes du procédé selon le premier aspect de la présente invention.

L'invention se rapporte également, selon un troisième aspect, à un véhicule comprenant un dispositif selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 11 annexées, sur lesquelles :
[Fig. 1] illustre schématiquement un habitacle d'un véhicule, selon un exemple de réalisation particulier et non limitatif de la présente invention ;
[Fig. 2] illustre schématiquement un dispositif de contrôle d'une interface homme-machine embarquée dans le véhicule de la figure 1, selon un exemple de réalisation particulier et non limitatif de la présente invention ;
[Fig. 3] illustre schématiquement un procédé de contrôle d'une interface homme-machine embarquée dans le véhicule de la figure 1, selon un exemple de réalisation particulier et non limitatif de la présente invention ;
[Fig. 4] illustre schématiquement un véhicule de la figure 1 dans une première situation, selon un autre exemple de réalisation particulier et non limitatif de la présente invention ;
[Fig. 5] illustre schématiquement un véhicule de la figure 1 dans une deuxième situation, selon un autre exemple de réalisation particulier et non limitatif de la présente invention ;
[Fig. 6] illustre schématiquement un véhicule de la figure 1 dans une troisième situation, selon un autre exemple de réalisation particulier et non limitatif de la présente invention ;
[Fig. 7] illustre schématiquement un véhicule de la figure 1 dans une quatrième situation, selon un autre exemple de réalisation particulier et non limitatif de la présente invention ;
[Fig. 8] illustre schématiquement un véhicule de la figure 1 dans une cinquième situation, selon un autre exemple de réalisation particulier et non limitatif de la présente invention ;
[Fig. 9] illustre schématiquement des profils de vitesse en fonction d'une distance à un nœud, selon un autre exemple de réalisation particulier et non limitatif de la présente invention ;
[Fig. 10] illustre schématiquement un écran embarqué dans le véhicule de la figure 1, selon un exemple de réalisation particulier et non limitatif de la présente invention ; et
[Fig. 11] illustre schématiquement un écran embarqué dans le véhicule de la figure 1, selon un autre exemple de réalisation particulier et non limitatif de la présente invention.

### Description des exemples de réalisation

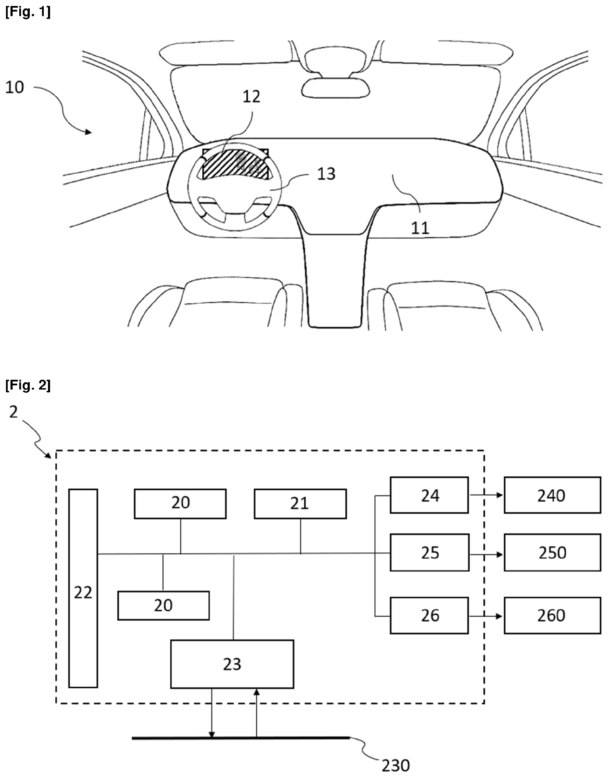

Un dispositif et un procédé de contrôle d'une interface homme-machine embarquée dans un véhicule vont maintenant être décrits dans ce qui va suivre en référence conjointement aux figures 1 à 11. Des mêmes éléments sont identifiés avec des mêmes signes de référence tout au long de la description qui va suivre.

Les termes « premier(s) », « deuxième(s) » (ou « pemière(s) », « deuxième(s) »), etc. sont utilisés dans ce document par convention arbitraire pour permettre d'identifier et de distinguer différents éléments (tels que des opérations, des moyens, etc.) mis en œuvre dans les modes de réalisation décrits ci-après. De tels éléments peuvent être distincts ou correspondre à un seul et unique élément, selon le mode de réalisation.

La figure 1 illustre schématiquement un habitacle d'un véhicule, par exemple un véhicule automobile, selon un exemple de réalisation particulier et non limitatif de la présente invention. Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond par exemple à un véhicule à moteur thermique, à moteur(s) électrique(s) ou encore un véhicule hybride avec un moteur thermique et un ou plusieurs moteurs électriques.

Le véhicule 10 correspond par exemple à un véhicule circulant dans un mode autonome ou semi-autonome. Le véhicule circule par exemple selon un niveau d'autonomie supérieur ou égal à 2, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Le véhicule 10 embarque avantageusement un ou plusieurs systèmes d'aide à la conduite, dit ADAS (de l'anglais « Advanced Driver-Assistance System » ou en français « Système d'aide à la conduite avancé »), dont un système de régulation de vitesse prédictif, dit système P-ACC ou PCC (de l'anglais « predictive adaptative cruise control » et « predictive cruise control »). Un tel système P-ACC est configuré pour assister, voire remplacer, le conducteur du véhicule 10 pour contrôler le véhicule 10 sur son parcours, notamment en contrôlant la vitesse de déplacement du véhicule 10 ou son accélération, définie selon une direction longitudinale du véhicule 10.

En effet, un système de régulateur de vitesse adaptatif et prédictif est un dispositif embarqué dans un véhicule destiné à ajuster automatiquement la vitesse et, le cas échéant, la trajectoire du véhicule en fonction de l'environnement routier et des conditions de circulation. Ce système utilise plusieurs types de données d'entrée, collectées par des capteurs embarqués et complétées par des informations provenant de dispositifs distants.

Le véhicule 10 embarque avantageusement des capteurs, par exemple un ou plusieurs capteurs listés ci-après : un radar frontal, une caméra avant, un LiDAR^{®}, ainsi que des capteurs de vitesse de roue, un accéléromètre et un gyroscope. Par exemple, le radar frontal est utilisé pour détecter la présence et la distance d'autres véhicules en aval du véhicule 10, c'est-à-dire situés devant le véhicule 10 et donc, s'ils sont dans la même voie de circulation, des véhicules précédant le véhicule 10. La caméra, quant à elle, analyse les marquages au sol, les panneaux de signalisation et parfois la signalisation lumineuse. Le lidar, lorsqu'il est présent, fournit une cartographie fine de l'environnement immédiat. Enfin, les capteurs de vitesse de roue, l'accéléromètre et le gyroscope, formant un module d'inertie embarqué dans le véhicule 10, permettent de connaître précisément la dynamique du véhicule 10.

Un écran 12, par exemple positionné derrière le volant 13 dans l'habitacle du véhicule 10, permet de fournir au conducteur une interface homme-machine, dite IHM, dédiée à l'utilisation du système P-ACC. Cet écran 12 est intégré dans le champ de vision du conducteur du véhicule 10 de manière à être facilement lisible sans quitter la route des yeux et présente une résolution suffisante pour afficher clairement des informations pertinentes à destination du conducteur même en plein jour.

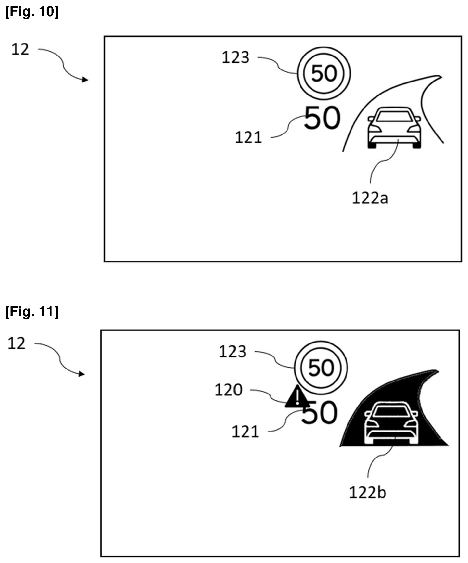

Comme illustré dans la figure 10, l'IHM affichée sur l'écran 12 est conçue pour être sobre et intuitive. Le calculateur associé au système P-ACC contrôle, soit directement, soit au travers d'un calculateur associé à un système d'infodivertissement, dit système IVI comprenant l'écran 12, l'affichage en temps réel la vitesse courante du véhicule via un objet graphique représentatif de la vitesse limite 123 ainsi que la vitesse de consigne définie par le conducteur via un objet graphique 121représentatif de la vitesse consigne. L'objet graphique 121 représentatif de la vitesse consigne revêt par exemple un premier aspect lorsque la vitesse courante du véhicule 10 est conforme à la vitesse consigne définie par le système P-ACC, l'objet graphique 121 représentatif de la vitesse consigne est par exemple de couleur verte, tandis que l'objet graphique 121 représentatif de la vitesse consigne revêt un deuxième aspect lorsque la vitesse courante du véhicule 10 n'est pas conforme à la vitesse consigne définie par le système P-ACC, par exemple lorsque le conducteur du véhicule 10 contrôle la vitesse du véhicule 10 à la place du système P-ACC actif en appuyant sur la pédale d'accélérateur, l'objet graphique 121 représentatif de la vitesse consigne est par exemple de couleur grise ou rouge pour alerter le conducteur du non-respect de la vitesse consigne.

L'affichage d'un objet graphique 122a représentatif d'une capacité du système P-ACC représentatif d'une capacité du système P-ACC à contrôler la vitesse ou l'accélération du véhicule 10 pour franchir un nœud lorsque le système P-ACC est actif et conformément à des paramètres acceptables prédéfinis, c'est-à-dire lorsque le système P-ACC est en mesure d'appliquer un profil de vitesse déterminé dans le nœud 101n notamment en fonction de la voie de circulation, des limitations de vitesse ou encore d'un type de nœud. Ainsi, à l'approche d'un nœud, si la vitesse du véhicule est conforme à une vitesse déterminée en fonction de la typologie du nœud et de la distance séparant la position courante du véhicule 10 du nœud, alors le système P-ACC a la capacité de contrôler le véhicule dans le nœud et l'objet graphique 122a est affiché.

Ainsi, la figure 10 illustre l'écran 12 et son contenu graphique tel qu'il est affiché lorsque le système P-ACC est activé et fonctionne de manière optimale, c'est-à-dire sans perturbation ou dérogation.

La navigation dans les différents réglages du système P-ACC se fait de manière simple, par le biais de commandes physiques à proximité immédiate, telles que des boutons ou des molettes sur le volant 13, évitant ainsi toute distraction liée à des manipulations complexes.

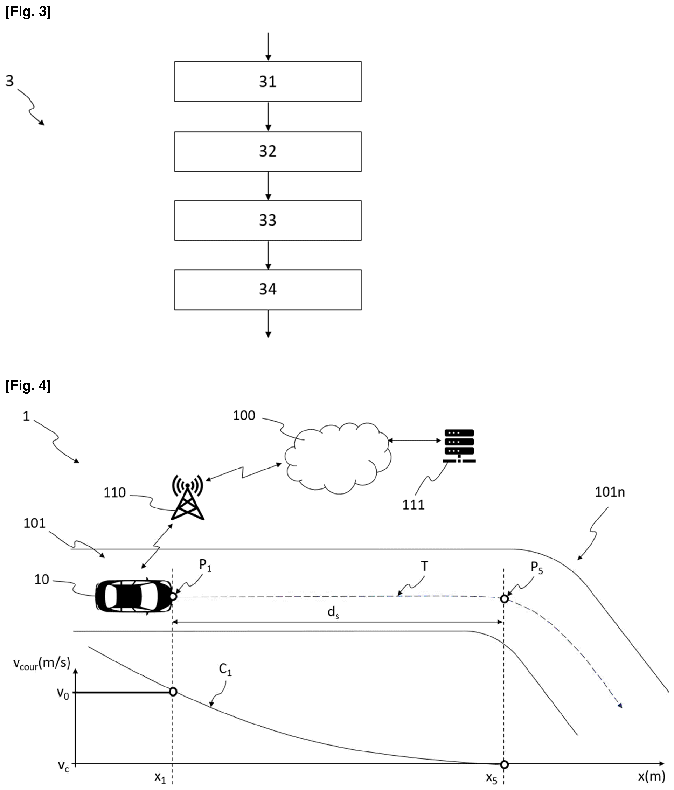

Comme illustré dans la figure 4 représentant le véhicule 1 dans un environnement 1 selon un exemple particulier de réalisation, le véhicule 10 embarque un système de communication configuré pour communiquer avec un ou plusieurs dispositifs distants 111 via une infrastructure d'un réseau de communication sans fil. Le dispositif distant 111 correspond par exemple à un serveur du « cloud » 100 (ou « nuage » en français). L'infrastructure de communication sans fil comprend par exemple un ensemble de dispositifs de communication 110 de type antenne de réseau cellulaire de type LTE 4G ou 5G ou de type UBR (Unité Bord de Route).

Le système de communication du véhicule 10 comprend par exemple une ou plusieurs antennes de communication reliées à une unité de contrôle télématique, dite TCU (de l'anglais « Telematic Control Unit »), elle-même reliée à un ou plusieurs calculateurs du système embarqué du véhicule 10, notamment un ou plusieurs calculateurs en charge de contrôler les systèmes ADAS du véhicule 10 dont le système P-ACC. La ou les antennes, l'unité TCU, le ou les calculateurs et les capteurs embarqués dans le véhicule 10 forment par exemple une architecture multiplexée pour la réalisation de différents services utiles pour le bon fonctionnement du véhicule et pour assister le conducteur et/ou les passagers du véhicule dans le contrôle du véhicule 10. Le ou les calculateurs et l'unité TCU communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Le système de communication sans fil permettant l'échange de données entre le véhicule 10 et le ou les dispositifs distants 111 correspond par exemple à :
- un système de communication véhicule à infrastructure V2I (de l'anglais « vehicle-to-infrastructure »), par exemple basé sur les standards 3GPP LTE-V ou IEEE 802.11p de ITS G5 ; ou
- un système de communication de type réseau cellulaire, par exemple un réseau de type LTE (de l'anglais « Long-Term Evolution » ou en français « Evolution à long terme »), LTE-Advanced (ou en français LTE-avancé) LTE 4G ou 5G ; ou
- un système de communication de type Wifi selon IEEE 802.11, par exemple selon IEEE 802.11n ou IEEE 802.11ac.

Selon un autre exemple particulier de réalisation, le véhicule 10 embarque un récepteur d'un système de géolocalisation par satellite de type GPS (de l'anglais « Global Positioning System » ou en français « Système mondial de positionnement ») ou le système Galileo par exemple en communication avec un calculateur du système embarqué du véhicule 10. Le système de géolocalisation par satellite est, par exemple, associé une cartographie.

La cartographie comprend, par exemple, une carte routière ou carte numérique haute définition enrichie d'informations statiques telles que le profil de la route ou voir de circulation 101, sa courbure, son dénivelé et/ou la présence d'autres voies de circulation, et dynamiques telles que des emplacements de zones de travaux, d'accidents et/ou de ralentissements, transmises via une connexion de données mobile.

La géolocalisation du véhicule 10 couplée au module d'inertie précédemment présenté permet alors de positionner précisément le véhicule 10 sur cette cartographie et donc de le positionner précisément par rapport à un nœud 101n référencé et situé en aval du véhicule 10, c'est-à-dire un nœud 101n que le véhicule 10 va prochainement aborder. Un tel nœud 101n correspond, par exemple, à :
- une intersection, ou
- un virage (comme illustré sur les figures 4 à 9), ou
- un changement de direction.
A noter que cette liste n'est pas exhaustive, un nœud correspondant à tout point critique situé sur la route ou sur le trajet du véhicule 10.

La cartographie couplée aux capteurs embarqués dans le véhicule 10 permettent ainsi de localiser précisément la position du nœud 101n par rapport à la position du véhicule 10 afin d'anticiper le comportement du véhicule 10 à l'approche de ce nœud 101n de manière à l'aborder confortablement et en toute sécurité.

Un indice de vitesse est par exemple déterminé par le système P-ACC ou prédéterminé, par exemple déjà renseigné dans la cartographie. Cet indice de vitesse est alors déterminé le cas échéant et est représentatif de caractéristiques de ce nœud 101n appartenant à un ensemble de caractéristiques comprenant :
- un nombre de voies,
- une géométrie ou un rayon de courbure de la portion de route 101,
- une limitation de vitesse,
- un régime de priorité.

Par exemple, en détectant un virage serré ou un carrefour à venir, le calculateur du système P-ACC contrôle la vitesse du véhicule 10 de manière à la réduire progressivement pour assurer une trajectoire sécurisée. Si le virage est précédé d'un panneau de limitation de vitesse, la caméra et la reconnaissance de signalisation peuvent compléter la décision de ralentissement que prend le calculateur du système P-ACC.

Cependant, à l'approche de ce nœud 101n, et par exemple parce que le véhicule 10 ralentit via le contrôle de sa vitesse par le système P-ACC, le conducteur du véhicule 10 peut souhaiter que la vitesse du véhicule dépasse la consigne de vitesse prise en considération par le système P-ACC de manière à outrepasser le système P-ACC et faire accélérer le véhicule 10.

Ces différentes situations sont alors décrites ci-après.

Un processus de contrôle de la vitesse du véhicule 10 et un processus de contrôle de l'IHM sont mis en œuvre par un ou plusieurs processeurs, par exemple le processeur du calculateur associé au système P-ACC ou du dispositif de la figure 2. La mise en œuvre de ce processus est notamment illustrée par des situations présentées dans les figures 4 à 9.

Dans une première situation illustrée dans la figure 4, le véhicule 10 se déplace sur la voie de circulation 101 et s'approche d'un nœud 101n, correspondant ici à un virage vers la droite. Ce type de nœud 101n est purement illustratif, l'ensemble du processus est également applicable pour d'autres types de nœuds, une intersection par exemple.

Le véhicule 10 est donc placé dans une position P₁ à une coordonnée x₁ définie sur la trajectoire T du véhicule 10. En aval du véhicule 10, soit devant le véhicule 10 qui se déplace en avançant sur la voie de circulation 101, se situe un nœud 101n, le début ou point d'entrée du nœud 101n étant positionné à une cinquième position P₅.

Le système P-ACC contrôle la vitesse du véhicule 10, qui avance à une vitesse initiale V₀, en d'autres termes des deuxièmes données représentatives d'un état actif du système P-ACC d'une décélération maximale autorisée aₘₐₓ prédéterminée ont été reçues préalablement et des quatrièmes données représentatives d'une vitesse courante v_{cour} du véhicule 10 sont reçues en permanence ou régulièrement.

Dans une première opération, des premières données représentatives de caractéristiques associées au nœud 101n sont reçues, les premières données comprenant :
- une valeur de distance entre une position courante du véhicule 10 et une position du nœud 101n, et
- une vitesse maximale vₘₐₓ de franchissement du nœud 101n sous le contrôle du système P-ACC.

A noter que, selon un exemple de réalisation particulier, la distance entre une position courante du véhicule 10 et une position du nœud 101n est déterminée au préalable par comparaison d'une position associée au nœud 101n obtenue d'une cartographie et d'une position courante du véhicule 10 obtenue par un système de géolocalisation.

Selon un autre exemple de réalisation particulier, la distance entre une position courante du véhicule 10 et une position du nœud 101n est déterminée par au moins un capteur embarqué dans le véhicule, le capteur appartenant à un ensemble de capteurs comprenant :
- une caméra,
- un radar, et
- un LiDAR.

Dans une deuxième opération, une distance seuil dₛ est déterminée. Cette distance seuil dₛ correspond à la distance à partir de laquelle le véhicule 10 se déplaçant à la vitesse initiale v₀ doit décélérer ou freiner pour aborder le nœud 101n conformément aux spécifications définies pour le système P-ACC pour s'engager dans le nœud 101n à la vitesse cible v_{c}. Cette distance seuil dₛ est définie de manière à ce que la décélération du véhicule 10 entre la première position P₁ et la cinquième position P₅ soit acceptable pour les passagers, notamment en termes de confort, cette décélération étant appelée décélération confort a_{conf}. La décélération du véhicule 10 est par exemple constante et égale à la décélération confort a_{conf} de manière à contrôler une décroissance linéaire de la vitesse du véhicule 10.

La figure 4 illustre notamment une première courbe C₁ illustrant un profil de vitesse représentant l'évolution de la vitesse d'un véhicule pour atteindre la vitesse cible v_{c} à l'entrée du nœud 101n, soit à la cinquième position P₅ de coordonnée x₅ définie selon la trajectoire T du véhicule 10, en appliquant une accélération égale à décélération de confort a_{conf}, la décélération de confort, a_{conf} étant une accélération constante négative prédéfinie pour le système P-ACC.

La distance seuil dₛ est définie entre la coordonnée x₅ de la cinquième position P₅ correspondant à la position de l'entrée du nœud 101n et la coordonnée x₁ correspondant à une première position P₁ telle qu'à partir de cette première position P₁, le véhicule 10 se déplaçant à une vitesse initiale v₀ atteindra la vitesse cible v_{c} à l'entrée du nœud 101n en décélérant avec une accélération égale à la décélération de confort a_{conf}.

La coordonnée x₁ de la première position P₁ sur la trajectoire T correspond ainsi à la coordonnée du point d'intersection entre la première courbe C1 et une droite horizontale d'ordonnée v₀ représentant la vitesse initiale v₀ du véhicule 10, la vitesse du véhicule 10 étant constante et contrôlée par le système P-ACC.

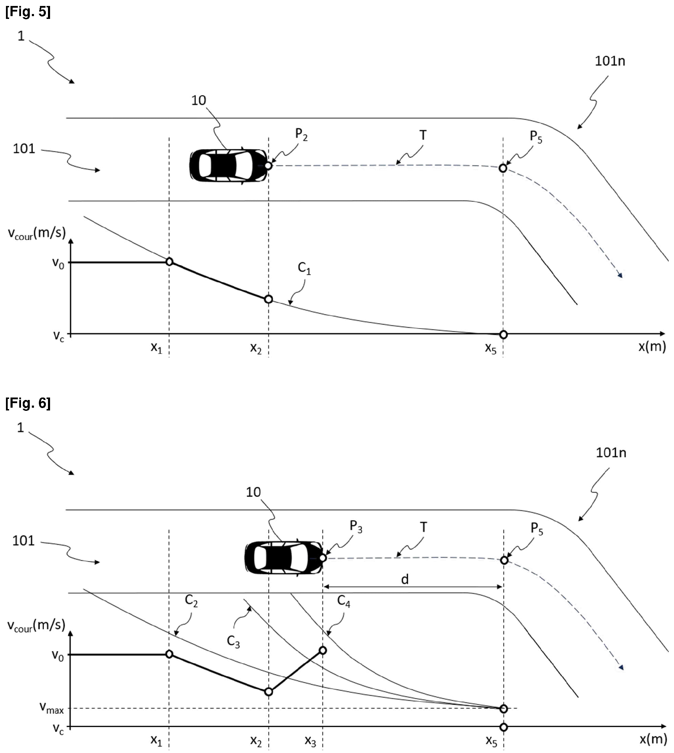

Comme illustrée dans la figure 5, lorsque la distance séparant la position courante du véhicule 10 de la position du nœud 101n est égale à la distance seuil dₛ, correspondant à l'atteinte de la première position P₁ selon l'exemple illustré, alors le système P-ACC contrôle, dans une troisième opération, la vitesse du véhicule 10 pour la faire décroître vers une vitesse cible v_{c} définie comme idéale pour franchir le nœud 101n, la vitesse courante v_{cour} du véhicule 10 suivant alors la première courbe C₁. Le système P-ACC agit alors sur le régime moteur et/ou sur le système de freinage du véhicule 10 et la vitesse courante du véhicule 10 décroît comme illustré dans la figure 5.

Pour l'instant, l'écran 12 affiche notamment l'objet graphique 121 représentatif de la vitesse consigne revêtant le premier aspect, le système P-ACC contrôlant la vitesse du véhicule 10 conformément à la consigne de vitesse déterminée par le système P-ACC à l'approche du nœud 101n, et l'objet graphique 122a, comme illustré dans la figure 10.

Lorsque le véhicule 10 est dans la deuxième position P₂ de coordonnée x₂ selon la trajectoire T, son conducteur souhaitant par exemple que le véhicule 10 avance plus rapidement appuie alors sur la pédale d'accélérateur pour contrôler la vitesse du véhicule 10, dérogeant alors au système P-ACC. Des données représentatives d'une consigne d'accélération sont reçues depuis un capteur associé à une pédale d'accélérateur du véhicule 10, la consigne d'accélération étant prioritaire vis-à-vis d'une consigne d'accélération déterminée par le système P-ACC. Ainsi, dès cet instant, la vitesse du véhicule 10 augmente alors ou diminue de manière moins importante, l'évolution de la vitesse du véhicule 10 ne suivant plus celle dictée par le système P-ACC.

Désormais, l'écran 12 affiche l'objet graphique 121 représentatif de la vitesse consigne revêtant le deuxième aspect, la vitesse consigne n'étant plus respectée.

Comme illustré dans la figure 6, dans cette situation, la vitesse du véhicule 10 est supérieure à la vitesse déterminée par le système P-ACC en suivant la première courbe de décélération C₁. Un point représentant la vitesse courante v_{cour} du véhicule 10 au deuxième instant est donc situé à droite de la première courbe C₁.

Une deuxième courbe C₂ correspond à la première courbe C₁ translatée verticalement de manière à obtenir une vitesse maximale vₘₐₓ de franchissement ou vitesse maximale à l'entrée du nœud 101n, la vitesse maximale vₘₐₓ étant supérieure à la vitesse cible v_{c} et définie par vₘₐₓ = v_{c} + Δ. Si la vitesse du véhicule 10 et la position du véhicule 10 correspondent à un point de la deuxième courbe C₂, alors le système P-ACC est en mesure d'amener le véhicule 10 à l'entrée du nœud 101n à la vitesse maximale vₘₐₓ en décélérant avec une accélération égale à la décélération de confort a_{conf} vue précédemment. En d'autres termes, si un point représentant la situation du véhicule 10 à une coordonnée x(m) et se déplaçant à la vitesse courante v_{cour}(m/s) se situe entre la première courbe C₁ et la deuxième courbe C₂, alors le système P-ACC est en mesure d'amener le véhicule 10 à l'entrée du nœud 101n à une vitesse comprise entre la vitesse cible v_{c} et la vitesse maximale vₘₐₓ en appliquant une accélération égale à la décélération de confort a_{conf}. Ainsi, dans une quatrième opération, une nouvelle vitesse cible est déterminée pour franchir le nœud 101n, la nouvelle vitesse cible étant supérieure à la vitesse cible v_{c} et inférieure ou égale à la vitesse maximale vₘₐₓ prédéfinie ou déterminée pour le nœud 101n.

Si le conducteur du véhicule 10 continue d'accélérer ou ne décélère pas assez, alors le point représentant la situation du véhicule 10 sera désormais situé à droite de la deuxième courbe C₂. Il faut donc décélérer davantage que précédemment pour atteindre la vitesse maximale vₘₐₓ à l'entrée du nœud 101n, la distance séparant le véhicule 10 du nœud 101n étant réduite. Or la décélération confort a_{conf} n'est pas suffisante pour atteindre cette vitesse maximale vₘₐₓ à l'entrée du nœud 101n.

Une décélération maximale admissible aₘₐₓ est alors prise en considération, cette décélération maximale admissible aₘₐₓ étant une valeur d'accélération constante négative et la valeur absolue de la décélération maximale admissible étant supérieure à la valeur absolue de la décélération de confort a_{conf} et définie de manière à permettre une décélération du véhicule 10 sécuritaire quoique moins confortable pour les passagers du véhicule 10. Ainsi, la quatrième courbe C₄ présente un profil de vitesse défini tel que la vitesse maximale vₘₐₓ est atteinte à l'entrée du nœud 101n en appliquant une accélération égale à la décélération maximale admissible aₘₐₓ.

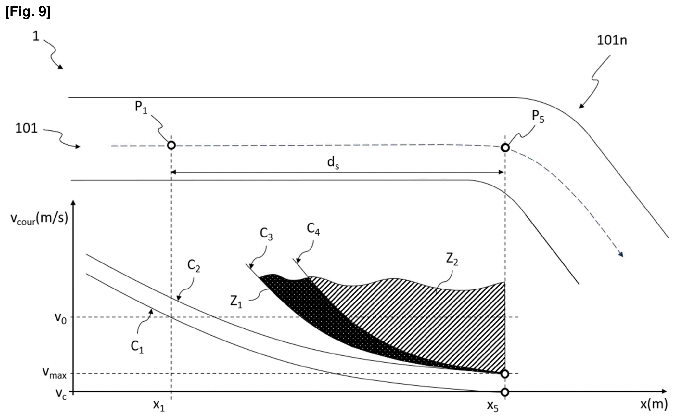

Si le point représentant la situation du véhicule 10 est situé à droite de la quatrième courbe C₄, c'est-à-dire dans la deuxième zone Z₂ illustrée dans la figure 9, alors le système P-ACC n'est plus en mesure de contrôler la vitesse du véhicule 10 pour l'amener à la vitesse maximale vₘₐₓ à l'entrée du nœud 101n, une décélération serait trop importante et non conforme aux paramètres applicables au système P-ACC. Dans cette situation, l'objet graphique 122a n'est plus affiché ou un autre objet graphique 122b représentatif d'une incapacité du système P-ACC à contrôler l'accélération du véhicule 10 pour franchir le nœud 101n, c'est-à-dire à contrôler la vitesse du véhicule 10 jusqu'à l'entrée du nœud 101n et dans le nœud 101n est affiché à la place de l'objet graphique 122a, par exemple cet objet graphique 122b est similaire à l'objet graphique 122a représentatif d'une capacité du système P-ACC mais son rendu est différent.

Cependant, afin de prévenir en avance le conducteur du véhicule 10 que le système P-ACC n'est bientôt plus en mesure de contrôler la vitesse du véhicule 10 à l'approche du nœud 101n et dans ce dernier, une décélération limite aₗᵢₘ, correspondant à une accélération constante négative et dont la valeur absolue est comprise entre la valeur absolue de la décélération maximale admissible aₘₐₓ et la valeur absolue de la décélération de confort a_{conf} est définie, par exemple cette décélération limite aₗᵢₘ est définie telle que aₗᵢₘ = a_{conf} + α avec α < 0, ainsi la valeur absolue de la décélération limite aₗᵢₘ est comprise entre la valeur absolue de la décélération de confort a_{conf} et la valeur absolue de la décélération maximale admissible aₘₐₓ : | a_{conf} | < | aₗᵢₘ | < | aₘₐₓ |.

Une telle décélération limite aₗᵢₘ est par exemple égale à la décélération de confort a_{conf} diminuée de 0,5m/s², soit aₗᵢₘ = a_{conf} - 0,5m/s² ou α = -0,5m/s². Ainsi, si l'accélération de confort a_{conf} est égale à -1,8 m/s², alors l'accélération limite aₗᵢₘ est égale à -2,3 m/s².

Selon un autre exemple de réalisation particulier, cette décélération limite aₗᵢₘ est définie telle que aₗᵢₘ = aₘₐₓ + α avec α > 0. Une telle décélération limite aₗᵢₘ est par exemple égale à la décélération maximale admissible aₘₐₓ augmentée de 0,5m/s², soit aₗᵢₘ = aₘₐₓ + 0,5m/s² ou α = +0,5m/s². Ainsi, si l'accélération maximale admissible aₘₐₓ est égale à -2,5 m/s², alors l'accélération limite aₗᵢₘ est égale à - 2,0 m/s².

La troisième courbe C₃ représente un profil de vitesse défini tel que la vitesse maximale vₘₐₓ est atteinte à l'entrée du nœud 101n en appliquant cette décélération limite aₗᵢₘ.

Ainsi, dans une cinquième opération, une décélération théorique aₜₕ est déterminée pour que le véhicule 10 atteigne la vitesse maximale vₘₐₓ à l'entrée du nœud 101n en fonction de la vitesse courante v_{cour} du véhicule 10 et de la distance d séparant la position du véhicule 10 de la position P₅ de l'entrée du nœud 101n.

Si la valeur absolue de l'accélération théorique aₜₕ est inférieure à la valeur absolue de la décélération limite aₗᵢₘ, alors il est toujours possible pour le système P-ACC de reprendre le contrôle de la vitesse du véhicule 10 pour franchir le nœud 101n sous réserve d'une nouvelle vitesse de franchissement du nœud 101n égale à la vitesse maximale vₘₐₓ et d'une valeur absolue de l'accélération théorique aₜₕ inférieure ou égale à la valeur absolue de la décélération maximale admissible aₘₐₓ.

Si le point représentant la situation du véhicule 10 est situé à gauche de la troisième courbe C₃, alors le système P-ACC est en mesure de contrôler la vitesse du véhicule 10 pour l'amener à la vitesse maximale vₘₐₓ à l'entrée du nœud 101n avec la valeur absolue de l'accélération théorique aₜₕ inférieure à la valeur absolue de la décélération limite aₗᵢₘ. L'objet graphique 122a est toujours affiché.

Si le point représentant la situation du véhicule 10 est situé à gauche de la quatrième courbe C₄ et à droite de la troisième courbe C₃, c'est-à-dire dans la première zone Z₁ illustrée dans la figure 9, alors le système P-ACC est en mesure de contrôler la vitesse du véhicule 10 pour l'amener à la vitesse maximale vₘₐₓ à l'entrée du nœud 101n avec l'accélération théorique aₜₕ dont la valeur absolue est comprise entre la valeur absolue de la décélération limite aₗᵢₘ et la valeur absolue de la décélération maximale admissible aₘₐₓ. Dans cette situation, dans une sixième opération, l'objet graphique 122a est par exemple affiché de manière intermittente et/ou un objet graphique représentatif d'une alerte 120 est affiché sur l'écran 12 de manière intermittente.

Le conducteur du véhicule 10 a alors connaissance de la possibilité de laisser le système P-ACC reprendre le contrôle de la vitesse du véhicule 10 tout en étant averti, dans le cas de l'affichage intermittent, qu'il s'approche des limites de fonctionnement du système P-ACC.

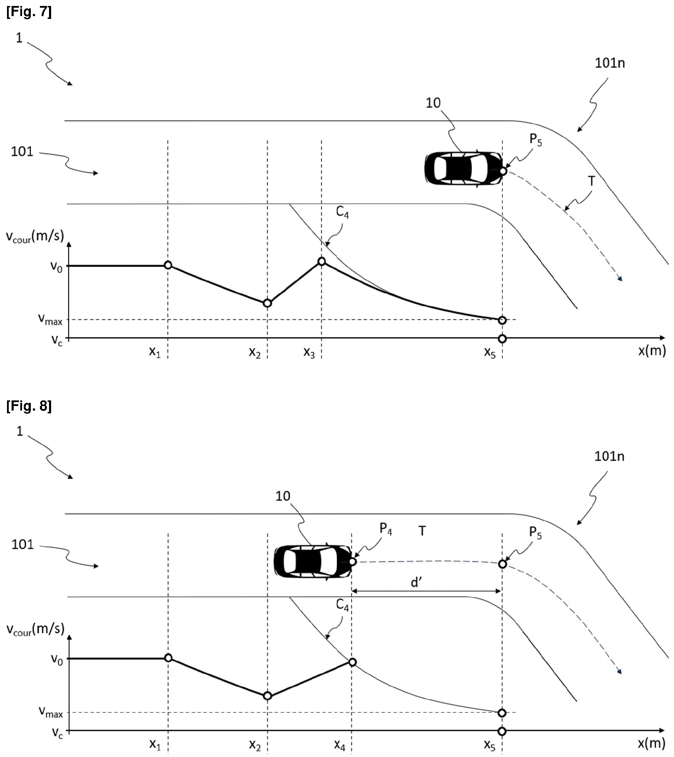

Si, tant qu'il est encore possible pour le système P-ACC d'amener la vitesse du véhicule 10 à ou sous la vitesse maximale vₘₐₓ en respectant une décélération théorique aₜₕ inférieure ou égale à la décélération maximale admissible aₘₐₓ, c'est-à-dire dans les deux situations décrites ci-dessus, le conducteur du véhicule 10 lâche la pédale d'accélérateur, alors des troisièmes données représentatives d'une fin de commande d'accélération du véhicule 10 sont reçues dans une septième opération et, dans une huitième opération, le système P-ACC reprend le contrôle de la vitesse du véhicule 10 comme illustré dans la figure 7. En effet, le conducteur rend le contrôle au système P-ACC lorsque le véhicule 10 est dans la troisième position P₃ de coordonnée x₃ sur la trajectoire T, et que la distance d séparant le véhicule 10 du nœud 101n est suffisante pour permettre la décélération du véhicule de manière sécuritaire pour atteindre une vitesse égale à la vitesse maximale vₘₐₓ à la cinquième position P₅ correspondant à l'entrée du nœud 101n.

A noter que le conducteur du véhicule 10 peut continuer de faire varier la vitesse du véhicule 10 comme illustré dans la figure 8. Les cinquième opération et sixième opération sont alors renouvelées régulièrement afin d'afficher les informations à jour concernant le système P-ACC, et notamment afin de contrôler l'affichage de l'objet graphique 122a, tant que le système P-ACC reste capable de reprendre le contrôle de la vitesse du véhicule 10 si l'accélérateur est lâché, c'est-à-dire tant qu'un point représentant la situation du véhicule 10 n'est pas situé dans la deuxième zone Z₂.

Si le conducteur du véhicule 10 continue de contrôler l'accélération ou la vitesse du véhicule 10 et qu'il n'est plus possible pour le système P-ACC d'amener la vitesse du véhicule 10 à la vitesse maximale vₘₐₓ en respectant une décélération théorique aₜₕ dont la valeur absolue est inférieure ou égale à la valeur absolue de la décélération maximale admissible aₘₐₓ, alors dans une neuvième opération, le système P-ACC émet un signal d'alerte à destination de l'IHM lorsque la décélération théorique aₜₕ est supérieure à la décélération maximale autorisée aₘₐₓ. Cette alerte est donc émise lorsque le véhicule 10 atteint la quatrième position P₄, de coordonnée x₄ sur la trajectoire T, c'est-à-dire quand le couple distance/vitesse représentant la situation du véhicule 10 franchit la quatrième courbe C₄. L'IHM émet alors, par exemple, un signal sonore à destination du conducteur et/ou contrôle un affichage d'un objet graphique représentatif d'une alerte 120 sur l'écran 12, comme illustré dans la figure 11. A noter que l'objet graphique 122a n'est alors plus affiché, et l'autre objet graphique 122b représentatif d'une incapacité du système P-ACC à contrôler l'accélération du véhicule 10 pour franchir le nœud 101n, c'est-à-dire à contrôler la vitesse du véhicule 10 jusqu'à l'entrée du nœud 101n et dans le nœud 101n, est optionnellement affiché à la place de l'objet graphique 122a. Le conducteur du véhicule 10 est ainsi prévenu que le système P-ACC n'est plus en mesure de reprendre le contrôle de la vitesse du véhicule 10 si le conducteur lâche la pédale d'accélérateur.

En effet, si le conducteur du véhicule 10 lâche la pédale d'accélérateur, alors des troisièmes données représentatives d'une fin de commande d'accélération du véhicule 10 sont reçues dans une dixième opération mais la vitesse du véhicule 10 n'est pas contrôlée par le système P-ACC, le contrôle de la vitesse du véhicule 10 reste à la charge du conducteur, par exemple jusqu'à avoir franchi le nœud 101n.

Un tel système de régulateur de vitesse adaptatif et prédictif, aussi appelé système P-ACC, permet ainsi de déroger à une consigne de vitesse tout en permettant, dans une certaine mesure, que le système P-ACC reprenne le contrôle de l'accélération ou de la vitesse du véhicule à l'approche d'un nœud. La vitesse cible est alors révisée de manière à permettre un franchissement plus rapide du nœud par le véhicule et une décélération maximale est également prise en compte afin de diminuer plus efficacement la vitesse du véhicule à l'approche de ce nœud. Des informations sont alors communiquées au conducteur du véhicule en permanence pour que celui-ci ait connaissance de la possibilité ou non de reprise du contrôle de la vitesse du véhicule par le système P-ACC lorsque le conducteur relâche l'accélérateur. La prise en compte d'une décélération limite permet également d'avertir le conducteur du véhicule que le système P-ACC approche de ses limites afin qu'il ne soit pas surpris par une suspension du système P-ACC même s'il relâche la pédale d'accélérateur.

Dans le cas où le système P-ACC n'est plus en mesure de contrôler le véhicule à l'approche du nœud selon des critères prédéfinis de sécurité et de confort, alors le système P-ACC laisse le conducteur gérer l'approche et le franchissement du nœud. Le système P-ACC reprend alors le contrôle de la vitesse du véhicule après avoir franchi le nœud par exemple.

La figure 2 illustre schématiquement un dispositif 2 configuré pour le contrôler une vitesse d'un véhicule, par exemple le véhicule 10, selon un exemple de réalisation particulier et non limitatif de la présente invention. Le dispositif 2 correspond par exemple à un dispositif embarqué dans le véhicule 10, par exemple un calculateur du système P-ACC.

Le dispositif 2 est par exemple configuré pour la mise en œuvre des opérations décrites en regard des figures 1 et 4 à 11 et/ou des étapes du procédé décrit en regard de la figure 3. Des exemples d'un tel dispositif 2 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un serveur distant ou le « cloud », d'autres nœuds du réseau ad hoc. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolutionà long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage 240, tactile ou non, un ou des haut-parleurs 250 et/ou d'autres périphériques 260 via respectivement des interfaces de sortie 24, 25 et 26. Selon une variante, l'un ou l'autre des dispositifs externes est intégré au dispositif 2.

La figure 3 illustre un organigramme des différentes étapes d'un procédé 3 de contrôle d'une interface homme-machine, dite IHM, comprenant un écran 12 et embarquée dans un véhicule, par exemple dans le véhicule 10, selon un exemple de réalisation particulier et non limitatif de la présente invention. Le procédé 3 est par exemple mis en œuvre par un dispositif embarqué dans le véhicule 10 ou par le dispositif 2 de la figure 2.

Dans une première étape 31, les données suivantes sont reçues :
- des données représentatives d'une valeur de distance d entre une position courante du véhicule 10 et une position du nœud 101n, et d'une vitesse maximale vₘₐₓ de franchissement du nœud 101n sous le contrôle du système P-ACC,
- des données représentatives d'une consigne d'accélération depuis un capteur associé à une pédale d'accélérateur dudit véhicule 10, la consigne d'accélération étant prioritaire vis-à-vis d'une consigne d'accélération déterminée par le système P-ACC,
- des données représentatives d'une décélération maximale autorisée aₘₐₓ prédéterminée pour le système P-ACC, et
- des données représentatives d'une vitesse courante v_{cour} du véhicule 10.

Dans une deuxième étape 32, une accélération théorique aₜₕ est déterminée en fonction de la valeur de distance d, de la vitesse maximale autorisée vₘₐₓ et de la vitesse courante v_{cour}.

Dans une troisième étape 33, l'accélération théorique aₜₕ est comparée à la décélération maximale autorisée aₘₐₓ.

Dans une quatrième étape 34, si la valeur absolue de l'accélération théorique aₜₕ est inférieure ou égale à la valeur absolue de la décélération maximale autorisée aₘₐₓ, un affichage d'un premier objet graphique 122a est contrôlé sur l'écran 12, le premier objet graphique 122a étant représentatif d'une capacité du système P-ACC à contrôler l'accélération du véhicule 10 pour franchir le nœud 101n.

Selon un exemple de réalisation particulier, le premier objet graphique 122a est affiché :
- de manière continue sur l'écran 12 lorsque la valeur absolue de l'accélération théorique aₜₕ est inférieure à la valeur absolue de la décélération limite aₗᵢₘ, et
- de manière intermittente sur l'écran 12 lorsque la valeur absolue de l'accélération théorique aₜₕ est comprise entre la valeur absolue de la décélération limite aₗᵢₘ et la valeur absolue de la décélération maximale admissible aₘₐₓ.

Dans une étape supplémentaire optionnelle, un affichage d'un deuxième objet graphique 120 et/ou 122b est contrôlé sur l'écran 12 si la valeur absolue de l'accélération théorique aₜₕ est supérieure à la valeur absolue de la décélération maximale autorisée aₘₐₓ, le deuxième objet graphique 120 et/ou 122b étant représentatif d'une alerte ou d'une incapacité du système P-ACC à contrôler l'accélération du véhicule 10 pour franchir le nœud 101n.

Selon une variante, les variantes et exemples des opérations décrits en relation avec les figures 1 et 4 à 11 s'appliquent aux étapes du procédé de la figure 3.

Bien entendu, la présente invention ne se limite pas aux exemples de réalisation décrits ci-avant mais s'étend à un procédé de contrôle d'une vitesse d'un véhicule à l'approche et/ou dans un nœud qui inclurait des étapes secondaires sans pour cela sortir de la portée de la présente invention. Il en serait de même d'un dispositif configuré pour la mise en œuvre d'un tel procédé.

La présente invention concerne également un véhicule, par exemple automobile ou plus généralement un véhicule autonome à moteur terrestre, comprenant le dispositif 2 de la figure 2.

## Revendications

1. Procédé de contrôle d'une interface homme-machine, dite IHM, embarquée dans un véhicule (10) et comprenant un écran (12), ledit véhicule (10) circulant sur une portion de route (101) d'un environnement routier (1) comprenant un nœud (101n) situé en aval du véhicule (10) selon un sens de déplacement du véhicule (10), le véhicule (10) embarquant un système de régulation de vitesse adaptatif, dit système P-ACC, ledit procédé étant mis en œuvre par au moins un processeur et comprenant les étapes suivantes :
- réception (31) de :
• données représentatives d'une valeur de distance (d) entre une position courante dudit véhicule (10) et une position dudit nœud (101n), et d'une vitesse maximale (vₘₐₓ) de franchissement dudit nœud (101n) sous le contrôle du système P-ACC,
• données représentatives d'une consigne d'accélération depuis un capteur associé à une pédale d'accélérateur dudit véhicule (10), ladite consigne d'accélération étant prioritaire vis-à-vis d'une consigne d'accélération déterminée par le système P-ACC,
• données représentatives d'une décélération maximale autorisée (aₘₐₓ) prédéterminée pour le système P-ACC,
• données représentatives d'une vitesse courante (v_{cour}) du véhicule (10),
- détermination (32) d'une accélération théorique (aₜₕ) en fonction de la valeur de distance (d), de la vitesse maximale (vₘₐₓ) et de la vitesse courante (v_{cour}) ;
- première comparaison (33) de la valeur absolue de l'accélération théorique (aₜₕ) à la valeur absolue de la décélération maximale autorisée (aₘₐₓ) ;
- si la valeur absolue de l'accélération théorique (aₜₕ) est inférieure ou égale à la valeur absolue de la décélération maximale autorisée (aₘₐₓ), contrôle (34) d'un affichage d'un premier objet graphique (122a) sur ledit écran (12), ledit premier objet graphique (122a) étant représentatif d'une capacité du système P-ACC à contrôler l'accélération du véhicule (10) pour franchir ledit nœud (101n).

2. Procédé selon la revendication 1, lequel comprend en outre une deuxième comparaison de la valeur absolue de l'accélération théorique (aₜₕ) à une valeur absolue d'une décélération limite (aₗᵢₘ) prédéterminée, ledit premier objet graphique (122a) étant affiché :
• de manière continue sur ledit écran (12) lorsque la valeur absolue de l'accélération théorique (aₜₕ) est inférieure à la valeur absolue de la décélération limite (aₗᵢₘ), et
• de manière intermittente sur ledit écran (12) lorsque la valeur absolue de l'accélération théorique (aₜₕ) est comprise entre la valeur absolue de la décélération limite (aₗᵢₘ) et la valeur absolue de la décélération maximale admissible (aₘₐₓ).

3. Procédé selon la revendication 1 ou 2, lequel comprend en outre un contrôle d'affichage d'un deuxième objet graphique (120, 122b) sur ledit écran (12) si la valeur absolue de l'accélération théorique (aₜₕ) est supérieure à la valeur absolue de la décélération maximale autorisée (aₘₐₓ), ledit deuxième objet graphique (120, 122b) étant représentatif d'une alerte ou d'une incapacité du système P-ACC à contrôler l'accélération du véhicule (10) pour franchir ledit nœud (101n).

4. Procédé selon l'une des revendications 1 à 3, pour lequel le nœud (101n) correspond à :
• une intersection, ou
• un virage, ou
• un changement de direction.

5. Procédé selon l'une des revendications 1 à 4, pour lequel l'indice de vitesse est représentatif d'au moins une caractéristique dudit nœud (101n) appartenant à un ensemble de caractéristiques comprenant :
• un nombre de voies,
• une géométrie ou un rayon de courbure de la portion de route (101),
• une limitation de vitesse,
• un régime de priorité.

6. Procédé selon l'une des revendications 1 à 5, pour lequel la distance (d) est déterminée par comparaison d'une position associée audit nœud (101n) obtenue d'une cartographie et d'une position courante du véhicule (10) obtenue par un système de géolocalisation.

7. Procédé selon l'une des revendications 1 à 5, pour lequel la distance (d) est déterminée par au moins un capteur embarqué dans le véhicule, ledit capteur appartenant à un ensemble de capteurs comprenant :
• une caméra,
• un radar, et
• un LiDAR.

8. Programme d'ordinateur comportant des instructions pour la mise en œuvre du procédé selon l'une quelconque des revendications précédentes, lorsque ces instructions sont exécutées par un processeur.

9. Dispositif (2) de contrôle d'une interface homme-machine embarquée dans un véhicule, ledit dispositif (2) comprenant une mémoire (21) associée à au moins un processeur (20) configuré pour la mise en œuvre des étapes du procédé selon l'une quelconque des revendications 1 à 7.

10. Véhicule (10) comprenant le dispositif (2) selon la revendication 9.
